# EUROPÄISCHE PATENTANMELDUNG

(11) **EP 3 769 991 A1**
(43) Veröffentlichungstag der Anmeldung: **27.01.2021**
(21) Anmeldenummer: 20186869.2
(22) Anmeldetag: 21.07.2020
(51) Int. Cl.: B60K 7/00, B60K 17/04

(54) **BEFESTIGUNG EINER ANTRIEBSEINHEIT**

(30) Priorität: 22.07.2019 DE 102019119781
(71) Anmelder: Breuell & Hilgenfeldt GmbH, 22844 Norderstedt (DE)
(72) Erfinder: Klahn, Michael, 22844 Norderstedt (DE); Michel, Robert, 22844 Norderstedt (DE)
(74) Vertreter: RGTH

(57) **Zusammenfassung**

Um eine erfindungsgemäße Traktionsantriebseinheit (100), insbesondere für ein Kraftfahrzeug, zu schaffen, welche einen Motor (10), insbesondere einen Elektromotor, ein Getriebe (30) und ein Befestigungselement (20), insbesondere zur Befestigung der Traktionsantriebseinheit (100) an einem Gehäuseteil (15) des Kraftfahrzeugs, umfasst, wird vorgeschlagen, dass das Befestigungselement (20) zwischen Motor (10) und Getriebe (30) angeordnet ist.

## Beschreibung

Die Erfindung betrifft eine Traktionsantriebseinheit, insbesondere für ein Kraftfahrzeug, vorzugsweise ein Flurförderzeug, welche einen Motor, insbesondere einen Elektromotor, ein Getriebe und ein Befestigungselement, insbesondere zur Befestigung der Traktionsantriebseinheit an einem Gehäuseteil des Kraftfahrzeuges, umfasst.

### Stand der Technik

Traktionsantriebe werden bei elektrisch betriebenen Kraftfahrzeugen, wie beispielsweise Flurförderzeugen, verwendet. Der Traktionsantrieb, welcher auch ein Radantrieb sein kann, kann aus einem Elektromotor und einem Getriebe bestehen. Im Fall der Verwendung einer Drehzahldifferenziallenkung ist es zudem üblich, jedes Rad über einen eigenen Getriebemotor anzutreiben. Dabei bilden Motor und Getriebe eine bauliche Einheit, welche gemeinsam konzipiert und hergestellt wird. Der Traktionsantrieb, wird dabei über den Abtriebsflansch des Getriebes an das Fahrzeug angeschlossen.

In der EP 2 481 621 A1 wird eine Achsantriebsordnung beschrieben, deren feste Spindel mit einem Befestigungsflansch und mehreren Befestigungsbolzen an einem Fahrzeug befestigt werden kann. Das Getriebe befindet sich dabei in der Spindel, wobei dort zusätzlich auch eine kombinierte Betriebs- und Haltebremse eingebaut ist. Die Spindel mit Getriebe ist nicht darauf ausgelegt, wieder vom Fahrzeug entfernt zu werden. Die Befestigung über den Befestigungsflansch mit Befestigungsbolzen am Fahrzeug ist nicht geeignet einfach montiert und demontiert zu werden, sondern vielmehr eine feste Anbringung.

In der WO 2015/029345 A1 wird eine Radnabe offenbart, in welcher ein Planetengetriebe und eine Bremsvorrichtung integriert sind. Die Radnabe ist über einen Befestigungsflansch mit dem Bremsträger und dem Hohlrad verbunden, wobei der Befestigungsflansch zusätzlich zur Befestigung der gesamten Montagebaugruppe mit dem Achskörper dient. Eine Befestigung zwischen Getriebe und Motor beziehungsweise eine einfache Lösung des Befestigungsflansches zum Austausch des Rades und/oder des Getriebes wird jedoch nicht dargelegt.

Im bekannten Stand der Technik ist der Getriebetausch eines Kraftfahrzeuges relativ aufwendig, da erst das Rad abgenommen werden muss, um Zugang zu dem mit dem Motor verbundenen Getriebe zu bekommen. Da sich das Getriebe im Innern des Fahrzeugs befindet, muss zudem das Fahrzeuggehäuse des Kraftfahrzeugs geöffnet werden, um das Getriebe für den Austausch zugänglich zu machen. Bei einem Austausch von Getriebeteilen muss zusätzlich häufig der Getriebemotor zerlegt werden Dies führt dazu, dass Getriebe, um ein aufwendiges Austauschen zu vermeiden, für eine lange Betriebsdauer, also dauerfest, ausgelegt werden und deswegen mit hohem Materialaufwand relativ teuer produziert werden.

### Darstellung der Erfindung: Aufgabe, Lösung und Vorteile

Es wäre demnach vorteilhaft, das Getriebe nicht mit dem Motor gemeinsam im Kraftfahrzeug unterzubringen, sondern so zu befestigen, dass das Getriebe unabhängig vom Motor entnommen werden kann oder vorzugsweise außerhalb des Fahrzeuggehäuses angebracht ist. Dadurch ist ein effizienter Getriebetausch bei dem Kraftfahrzeug möglich, wodurch das Getriebe, welches vorzugsweise in ein Rad integriert ist, als Wechselteil konzipiert werden kann und sich durch die reduzierte Getriebelaufzeit die Herstellungskosten verringern und die Fahrzeugkosten senken.

Der Erfindung liegt die Aufgabe zugrunde, bei einem oben beschriebenen Traktionsantrieb die Befestigung derart zu verbessern, dass ein effizienter Getriebetausch oder Tausch einzelner Getriebeteile möglich wird, sodass die Getriebeteile als Wechselteile konzipiert werden können.

Die vorliegende Erfindung löst dies dadurch, dass die Antriebseinheit, beziehungsweise der Traktionsantrieb und/oder der Radantrieb, mit einem Befestigungselement zwischen Motor und Getriebe am Fahrzeuggehäuse befestigt wird, sodass sich nur der Motor, nicht aber das Getriebe, innerhalb des Fahrzeuggehäuses des Kraftfahrzeugs untergebracht ist. Das Getriebe ist dabei außerhalb des Fahrzeuggehäuses mit einem Rad, oder vorzugsweise in dem Rad, an das Befestigungselement angebracht.

Die erfindungsgemäße Traktionsantriebseinheit, insbesondere für ein Kraftfahrzeug, vorzugsweise ein Flurförderzeug, umfasst einen Motor, insbesondere einen Elektromotor, ein Getriebe und ein bevorzugt gemeinsames Befestigungselement, welches insbesondere zur Befestigung der Traktionsantriebseinheit an einem Gehäuseteil des Kraftfahrzeuges verwendet wird. Dabei ist das Befestigungselement bevorzugt zumindest teilweise zwischen Motor und Getriebe angeordnet. Vorzugsweise ist das Getriebe im Rad des Fahrzeuges integriert, wird also mit diesem gemeinsam am Befestigungselement befestigt. Die Traktionsantriebseinheit kann hierbei auch ein Radantrieb sein.

Das Kraftfahrzeug kann dabei auch ein Flurförderzeug, ein Agrarfahrzeug, ein Reinigungsfahrzeug oder ein fahrerloses Transportsystem sein, es kann aber auch jegliche andere Art von motorbetriebenem Fahrzeug sein.

Das Befestigungselement kann dabei ein Befestigungsflansch sein, der entweder als Teil des Gehäuses von Motor oder Getriebe ausgeformt ist, kann jedoch auch ein separater Dichtflansch sein, also ein Zwischenflansch, welcher mit Dichtungen und Befestigungsmöglichkeiten ausgestattet ist. Insbesondere wird zur Befestigung von Motor und Getriebe nur ein einziges, gemeinsames Befestigungselement verwendet. Das Befestigungselement befestigt die Traktionsantriebseinheit an einem Teil des Fahrzeuggehäuses beziehungsweise an einem Teil der Karosserie des Kraftfahrzeuges. Dabei ist das Befestigungselement, vorzugsweise zumindest teilweise, zwischen Motor und Getriebe angeordnet.

Bei der vorliegenden Traktionsantriebseinheit können Motor und Getriebe, wahlweise auch mit einer integrierten Bremsvorrichtung, als gemeinsame Einheit gefertigt werden. Dies hat den Vorteil, dass die gemeinsame Einheit einfacher im Kraftfahrzeug zu montieren ist als die Einzelteile, da sie von außen in das Fahrzeuggehäuse einsetzbar ist und zuvor an einer anderen, besser zugänglichen, Stelle gefertigt werden kann. Zudem können unterschiedliche Dichtigkeitsanforderungen für Motor und Getriebe realisiert werden, da das Motorgehäuse und das Getriebegehäuse durch das Befestigungselement getrennt sind und somit auch unabhängig voneinander am Befestigungselement abgedichtet werden können.

Das Befestigungselement ist in der Traktionsantriebseinheit das tragende Element zwischen Motor und Getriebe, da beide an diesem befestigt werden und mit diesem die Traktionsantriebseinheit im Kraftfahrzeug angebracht wird. Das Getriebegehäuse des Getriebes oder ein Rad mit integriertem Getriebe kann dabei mit einem Dichtflansch am Befestigungselement angebracht werden. Das Rad mit integriertem Getriebe oder das Getriebegehäuse kann jedoch auch eigenständig abgedichtet sein und am Befestigungselement befestigt werden. Gerade, wenn das Rad mit integriertem Getriebe oder das Getriebegehäuse einen besonders hohen Dichtungsschutz benötigt, beispielsweise um Öl- oder Fettaustritt zu vermeiden, ist eine separate Abdichtung des Getriebegehäuses oder des Rades, in welchem sich das Getriebe befindet, sinnvoll. Vorzugsweise wird das Rad mit integriertem Getriebe oder das Getriebegehäuse mit einem runden Flansch am Befestigungselement oder an dem Fahrzeuggehäuse angebracht.

Vorzugsweise ist das Befestigungselement ein dem Getriebe zugewandtes Seitenelement des Motorgehäuses. Durch die Nutzung einer Seitenfläche des Motorgehäuses als Befestigungselement ist kein separater Motorflansch nötig, welcher den Motor am Befestigungselement befestigt und mit dem angepassten Befestigungselement kann sowohl das Getriebe am Motor befestigt werden, als auch die komplette Traktionsantriebseinheit am Fahrzeug. Dies verringert sowohl die Anzahl der benötigten Bauteile, als auch den Materialverbrauch und spart zudem Bauraum im und/oder am Kraftfahrzeug. Ein weiterer Vorteil der Befestigung des Traktionsantriebs über die sogenannte A-Seite beziehungsweise dem A-Lagerschild des Motors, also der dem Getriebe zugewandten Seitenfläche des Motorgehäuses, gegenüber der B-Seite beziehungsweise dem B-Lagerschild des Motors, also der der A-Seite gegenüberliegenden, zum Fahrzeuginnern gewandten Seitenfläche des Motorgehäuses, sind die kürzeren Hebelverhältnisse bei der Befestigung, die durch eine Platzierung des Befestigungselementes zwischen Getriebe und Motor ermöglicht werden. Dadurch entsteht ein erheblich günstigerer Kraftfluss, und es können höhere Traglasten realisiert werden. Ein weiterer Vorteil ist die bessere Kühlmöglichkeit, da meist über den B-Lagerschild des Motors gekühlt wird und dieser dann für Kühlelemente oder Kühlstoffe, wie beispielsweis Luft, frei bleibt.

Bevorzugterweise ist das Befestigungselement eine von einem Getriebegehäuse oder dem Motorgehäuse unabhängige, also separate, Einheit, beispielsweise ein Zwischenflansch oder ein Dichtflansch. Dies hat den Vorteil, dass ein Standard-Motor und ein Standard-Getriebe mit dem jeweiligen Standard-Gehäuse verwendet werden kann, und nur das Befestigungselement als neues Bauteil oder Sonderteil zusätzlich gefertigt werden muss. Durch die Übernahme vieler Standard-Komponenten lassen sich somit Kosten reduzieren.

Besonders bevorzugt umfasst das Befestigungselement eine Bremsvorrichtung. Die Bremsvorrichtung kann dabei im Befestigungselement integriert sein oder ein Teil des Befestigungselements sein, wobei die Bremsvorrichtung vorzugsweise der Teil des Befestigungselementes ist, welches mit dem Fahrzeuggehäuse verbindbar ist oder über das die Befestigung am Fahrzeuggehäuse vorgenommen wird, also ein Teil des Befestigungsflansches oder des Dichtflansches des Befestigungselementes zum Fahrzeuggehäuse hin. Das Befestigungselement kann sowohl zwischen einer Baueinheit aus Motor und Getriebe und dem Rad des Fahrzeuges angeordnet sein, als auch zwischen dem Motor und dem Getriebe des Kraftfahrzeugs, wobei das Getriebe dabei vorzugsweise in ein Rad integriert ist. Ist die Bremsvorrichtung oder ein Teil der Bremsvorrichtung das Befestigungselement oder ein Teil des Befestigungselements, beispielsweise ein Flansch, so kann diese auch dazu ausgeformt sein, ein Rad des Fahrzeugs, vorzugsweise ein Rad mit integriertem Getriebe am Befestigungselement zu befestigen. Bevorzugterweise wird dann im Fall eines Austauschs des Rades und/oder des Getriebes die Bremse und das Befestigungselement nicht mit getauscht. Das Getriebe und/oder das Rad sind einfach und unkompliziert, beispielsweise durch wenige Schrauben, von dem Befestigungselement lösbar. Die Bremsvorrichtung kann dabei das zentrale Anbauelement der Traktionsantriebseinheit sein, an welchem Motor und Getriebe befestigt werden, und mit welchem die Traktionsantriebseinheit am Fahrzeuggehäuse angebracht werden.

Vorzugsweise ist die Bremsvorrichtung, welche ein Teil des Befestigungselementes ist, eine Betriebsbremse. Ganz besonders bevorzugt ist neben der Betriebsbremse auch die Haltebremse ein Teil des Befestigungselementes, wobei die Haltebremse ebenfalls in den Flansch integriert sein kann. Alternativ kann die Haltebremse jedoch auch im Motor integriert werden. Bevorzugterweise umfasst die Bremsvorrichtung eine Haltebremse, welche eine Notstoppfunktion umfasst. Die Integration der Bremsvorrichtung in das Befestigungselement hat den Vorteil, dass damit eine sehr kompakte Bauweise möglich ist, da bei Außenläufermotoren die Bremsvorrichtung vergleichsweise unkompliziert auf dem A-Lagerschild des Motors angebaut werden kann, und somit optimal im Befestigungselement integriert werden kann beziehungsweise ein Teil des Befestigungselements sein kann. Es ist zudem vorteilhaft, die Bremsvorrichtung nicht auf der Abtriebsseite des Getriebes zu montieren, da hier höhere Drehmomente auftreten. Eine Anordnung der Bremsvorrichtung zwischen Motor und Getriebe ist somit optimal.

Insbesondere ist bevorzugt, dass das Befestigungselement einen Sensor umfasst. Bei Elektromotoren, insbesondere bei Außenläufermotoren ist es vorteilhaft, den Drehgeber oder einen anderen Sensor, aber auch die Bremsvorrichtung, auf dem A-Lagerschild des Motors anzubauen, wodurch eine sehr kompakte Bauweise realisiert werden kann, und das B-Lagerschild des Motors, über welches der Motor vorzugsweise Wärme abgibt und gekühlt wird, nicht zugebaut wird. Speziell bei einem Außenläufermotor ist es vorteilhaft, Bremsvorrichtungen und Sensoren auf der A-Seite beziehungsweise dem A-Lagerschild zu platzieren, da auf der dem Getriebe zugewandten Seitenfläche die Abtriebswelle des Motors in der Regel ortsfest gelagert ist. Am B-Lagerschild des ist die Welle oftmals auf einem Schiebesitz gelagert ist, um Wärmedehnungen des Rotors auszugleichen, damit sich die relative Lage von Rotor und Stator bei unterschiedlichen Temperaturen nicht ändert. Da der Lagerschild dazu beim Öffnen und Verschließen des Motorgehäuses aufwendig eingepasst werden muss, da nicht nur die richtige Lage des Schildes notiert werden muss, um einen exakten gleichen Einbau wieder sicherzustellen, sondern auch alle Befestigungsteile genau eingepasst werden müssen, ist ein Einbau und Ausbau möglichst zu vermeiden. Wenn also der Motor für Wartungsarbeiten beziehungsweise für Arbeiten am Getriebe oder am Rad oder dem Austausch von Wechselteilen nicht geöffnet werden muss, reduziert dies die Montagezeiten enorm. Besonders bevorzugt sind deshalb alle Zusatzkomponenten, wie beispielsweise Sensoren und Bremsvorrichtungen, im Befestigungsflansch oder dem A-Lagerschild des Motors angeordnet.

In einer bevorzugten Ausfertigung umfasst das Befestigungselement der Traktionsantriebseinheit mindestens ein Dichtelement, zur Abdichtung zwischen dem Befestigungselement und einem Fahrzeuggehäuse, vorzugsweise auch zwischen dem Befestigungselement und einem Motorgehäuse. Dies stellt eine preiswerte Möglichkeit der Fahrzeugabdichtung dar, da ohne zusätzliche Komponenten der Motor abgedichtet werden kann, und daher nicht separat abgedichtet werden muss oder selbst eine hohe Schutzart haben muss, da er geschützt im Inneren des Kraftfahrzeuges liegt und über das Befestigungselement und das Fahrzeuggehäuse abgedichtet wird. Das Befestigungselement dient somit auch als Dichtflansch für den Motor. Der Motor ist vorzugsweise auch gegenüber dem Getriebe abgedichtet, welches wegen Öl- oder Fettschmierungen hohe Dichtigkeitsanforderungen hat. Aus diesem Grund kann der Motor, wenn er durch das Befestigungselements getrennt vom Getriebe im Fahrzeuginneren eingebaut ist, auch mit niedrigerer Schutzart ausgeführt werden, da das Getriebe, beziehungsweise dessen Getriebeöl oder Schmiermittel, nicht mit dem Motor in Berührung kommt. Insbesondere kann der Motor dadurch ein Außenläufermotor sein, welcher mit niedrigerem Dichtungsschutz ausgestattet ist und erheblich preiswerter ist, als herkömmliche Elektromotoren. Zudem kann das Getriebe oder ein Rad mit integriertem Getriebe unabhängig vom Motor gegen Fettaustritt abgedichtet werden. Das Befestigungselement kann für unterschiedliche Dichtungsanforderungen in den Verbindungen zum Motor und zum Getriebe ausgelegt sein, also unterschiedliche Dichtelemente zum abdichten der Verbindung umfassen, falls die Komponenten dies erfordern.

In einer besonders bevorzugten Ausführungsform ist das Getriebe der Traktionsantriebseinheit ein Planetengetriebe. Dies ermöglicht eine kompakte Bauweise des Getriebes, was auch die Integration in das Rad des Fahrzeuges stark erleichtert. Es ist zudem kein Achsversatz zur Motorachse gegeben, weswegen keine Querkräfte auf der Motorabtriebswelle lagern, was deren Langlebigkeit erhöht. Durch die Integration des Getriebes in das Rad sind erhebliche Platzeinsparungen möglich und die Maximierung der Tragfähigkeit des Getriebes wird verbessert.

Bevorzugterweise ist der Motor ein Elektromotor, insbesondere ein Außenläufermotor. Diese haben eine besonders hohe Leistungsdichte, bei gleichzeitiger kompakter Bauweise, was Platz, Material und Herstellungskosten spart.

Vorzugsweise ist das Befestigungselement der Traktionsantriebseinheit durch axiale Verschraubung am Fahrzeuggehäuse befestigbar. Alternativ ist das Befestigungselement der Traktionsantriebseinheit durch radiale Verschraubung am Fahrzeuggehäuse befestigbar. Vorzugsweise ist dabei die Verschraubung lösbar, ganz besonders bevorzugt einfach lösbar, sodass das am Befestigungselement angebrachte Getriebe oder Rad einfach gewechselt werden kann und auch das Befestigungselement leicht vom Fahrzeuggehäuse und/oder dem Motorgehäuse getrennt werden kann und miteinander verbunden werden kann.

Vorzugsweise ist die Traktionsantriebseinheit ein Radantrieb beziehungsweise eine Radantriebseinheit.

Ganz besonders bevorzugt ist das Getriebe lösbar mit dem Befestigungselement verbunden. Das bedeutet, dass das Getriebe leicht vom Kraftfahrzeug abnehmbar beziehungsweise vom Befestigungselement trennbar ist, wodurch das Getriebe gut wechselbar ist. Motor, Bremsvorrichtung und Sensoren werden dabei nicht entfernt und verbleiben am beziehungsweise im Kraftfahrzeug. Das Rad ist dabei vorzugsweise gemeinsam mit dem Getriebe lösbar, insbesondere wenn das Getriebe in das Rad integriert ist. Ein weiterer Vorteil der Befestigung der Traktionsantriebseinheit, beziehungsweise des Antriebsstranges, zwischen Motor und Getriebe, ist, dass das Getriebe separat mit dem Rad und eventuellen Verschleißteilen, wie Schmierstoffen und Dichtungen gemeinsam, einfach und kosteneffizient tauschbar ist, während der Motor und wertige Komponenten wie beispielsweise die Haltebremse und die Sensorik im oder am Fahrzeug befestigt bleiben.

### Kurze Beschreibung der Zeichnungen

Die folgenden vorteilhaften Ausführungsform und Ausführungsbeispiele der Erfindung werden nachstehend anhand der Zeichnungen näher erläutert. Es zeigen schematisch:
- Figur 1: eine Explosionszeichnung der Traktionsantriebseinheit mit Befestigungselement am Kraftfahrzeug,
- Figur 2: eine Darstellung des am Kraftfahrzeug montierten Befestigungselementes mit Motor und ein davon gelöstes Rad,
- Figur 3: eine Darstellung der Befestigungsfläche am Fahrzeuggehäuse mit Befestigungselement, und

### Bevorzugte Ausführungsformen der Erfindung

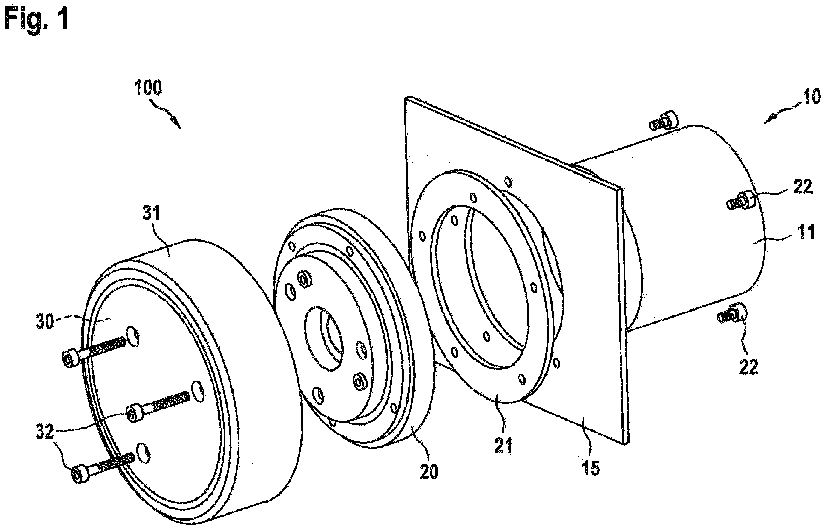

Die Traktionsantriebseinheit 100, welche in Figur 1 in einer Explosionsdarstellung gezeigt wird, umfasst einen Motor 10 in einem Motorgehäuse 11, ein Befestigungselement 20 und ein Getriebe 30., Das Befestigungselement 20 wird mit mehreren Schrauben 22 durch Löcher im Fahrzeuggehäuse 15 und Dichtelement 21 am Fahrzeuggehäuse 15befestigt. Zwischen dem Befestigungselement 20, welches auf der Außenseite des Fahrzeuges am Fahrzeuggehäuse 15 befestigbar ist, und dem Fahrzeuggehäuse 15 ist ein Dichtelement 21 angeordnet, welches das Fahrzeuginnere mit dem Motor 10 abdichten kann. Am Befestigungselement 20 ist auf der dem Motor 10 gegenüberliegenden Seitenfläche ein Rad 31 mit integriertem Getriebe 30 mit mehreren Schrauben 32 befestigbar.

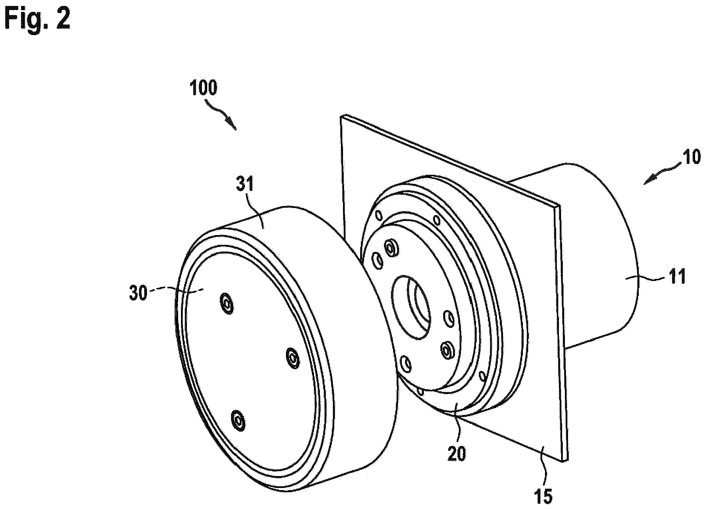

Figur 2 zeigt die Traktionsantriebseinheit 100 mit am Fahrzeuggehäuse 15 befestigten Motor 10 und Befestigungselement 20. Dabei ist das Befestigungselement 20 auf der Außenseite des Fahrzeuggehäuses 15 angebracht, wobei der Motor über das Motorgehäuse 11 auf der dem Fahrzeuginneren zugewandten Seitenfläche des Fahrzeuggehäuses 15 angebracht ist. Das Rad 31 mit integriertem Getriebe 30 ist getrennt vom Befestigungsflansch 15 dargestellt, wobei das Rad 31 an der dem Fahrzeuggehäuse 15 abgewandten Seitenfläche des Befestigungselementes 20 befestigbar ist.

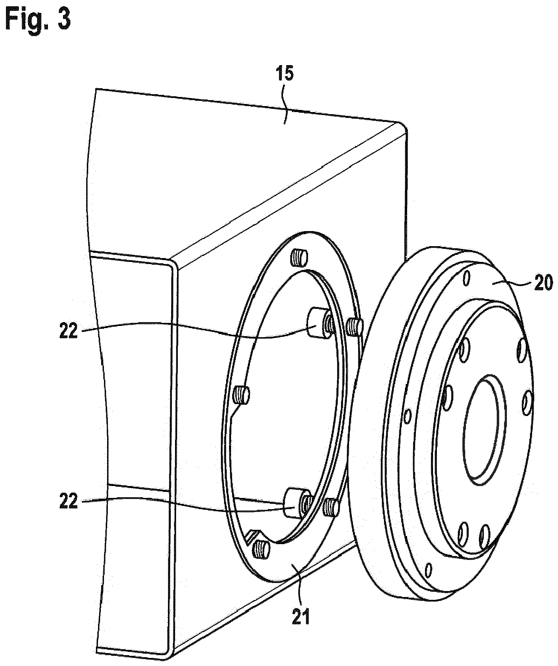

In Figur 3 wird das Fahrzeuggehäuse 15 mit dem darauf angebrachten Dichtelement 21 gezeigt, wobei mit Schrauben 22 das Befestigungselement 20 am Fahrzeuggehäuse 15 so angebracht werden kann, dass das Befestigungselement 20 das Dichtelement 21 umschließt.

### Bezugszeichenliste

- 100: Traktionsantriebseinheit

- 10: Motor
- 11: Motorgehäuse
- 15: Fahrzeuggehäuse

- 20: Befestigungselement
- 21: Dichtelement
- 22: Schrauben

- 30: Getriebe
- 31: Rad
- 32: Schrauben

## Patentansprüche

1. Traktionsantriebseinheit (100), insbesondere für ein Kraftfahrzeug, vorzugsweise ein Flurförderzeug, umfassend einen Motor (10), insbesondere einen Elektromotor, ein Getriebe (30) und ein Befestigungselement (20), insbesondere zur Befestigung der Traktionsantriebseinheit (100) an einem Gehäuseteil (15) des Kraftfahrzeugs,
**dadurch gekennzeichnet,**
**dass** das Befestigungselement (20) zwischen Motor (10) und Getriebe (30) angeordnet ist.

2. Traktionsantriebseinheit (100) nach Anspruch 1,
**dadurch gekennzeichnet,**
**dass** das Befestigungselement (20) ein dem Getriebe (30) zugewandtes Seitenelement eines Motorgehäuses (11) bildet.

3. Traktionsantriebseinheit (100) nach Anspruch 1,
**dadurch gekennzeichnet,**
**dass** das Befestigungselement (20) eine von einem Getriebegehäuse oder dem Motorgehäuse (11) unabhängige, also separate, Einheit, beispielsweise ein Zwischenflansch, ist.

4. Traktionsantriebseinheit (100) nach einem der vorhergehenden Ansprüche,
**dadurch gekennzeichnet,**
**dass** das Befestigungselement (20) eine Bremsvorrichtung (40) umfasst.

5. Traktionsantriebseinheit (100) nach einem der vorhergehenden Ansprüche,
**dadurch gekennzeichnet,**
**dass** das Befestigungselement (20) einen Sensor umfasst.

6. Traktionsantriebseinheit (100) nach einem der vorhergehenden Ansprüche,
**dadurch gekennzeichnet,**
**dass** das Befestigungselement (20) mindestens ein Dichtelement (21) umfasst, welches zur Abdichtung von einem Fahrzeuggehäuse (15), und vorzugsweise auch einem Motorgehäuse (11), ausgebildet ist.

7. Traktionsantriebseinheit (100) nach einem der vorhergehenden Ansprüche,
**dadurch gekennzeichnet,**
**dass** das Getriebe (30) ein Planetengetriebe ist.

8. Traktionsantriebseinheit (100) nach einem der vorhergehenden Ansprüche,
**dadurch gekennzeichnet,**
**dass** der Motor (10) ein Elektromotor, insbesondere ein Außenläufermotor ist.

9. Traktionsantriebseinheit (100) nach einem der vorhergehenden Ansprüche,
**dadurch gekennzeichnet,**
**dass** das Befestigungselement (20) der Traktionsantriebseinheit (100) durch axiale Verschraubung am Fahrzeuggehäuse (15) befestigbar ist.

10. Traktionsantriebseinheit (100) nach einem der Ansprüche 1 - 8,
**dadurch gekennzeichnet,**
**dass** das Befestigungselement (20) der Traktionsantriebseinheit (100) durch radiale Verschraubung am Fahrzeuggehäuse (15) befestigbar ist.

11. Traktionsantriebseinheit (100) nach einem der vorhergehenden Ansprüche,
**dadurch gekennzeichnet,**
**dass** die Traktionsantriebseinheit (100) ein Radantrieb ist.

12. Traktionsantriebseinheit (100) nach einem der vorhergehenden Ansprüche,
**dadurch gekennzeichnet,**
**dass** das Getriebe (30) lösbar mit dem Befestigungselement (20) verbunden ist.
